(19) **Europäisches Patentamt European Patent Office Office européen des brevets**

(11) **EP 3 995 855 B1**

(12) **FASCICULE DE BREVET EUROPEEN**

(45) Date de publication et mention de la délivrance du brevet:
**15.04.2026 Bulletin 2026/16**

(21) Numéro de dépôt: **21206376.2**

(22) Date de dépôt: **04.11.2021**

(51) Classification Internationale des Brevets (IPC):
*G01S 17/08* (2006.01)    *G01S 17/42* (2006.01)
*G01S 17/89* (2020.01)    *G01S 17/931* (2020.01)
*G01S 7/48* (2006.01)

(52) Classification Coopérative des Brevets (CPC):
**G01S 17/42; G01S 7/4808; G01S 17/08; G01S 17/89; G01S 17/931**

(54) **PROCÉDÉ DE MESURE D'UNE DISTANCE D'UN VÉHICULE À UN QUAI**

VERFAHREN ZUR MESSUNG DES ABSTANDS EINES FAHRZEUGS VON EINER RAMPE

METHOD FOR MEASURING A DISTANCE FROM A VEHICLE TO A DOCK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2020 FR 2011300**

(43) Date de publication de la demande:
**11.05.2022 Bulletin 2022/19**

(73) Titulaire: **ALSTOM Holdings**
**93400 Saint-Ouen-sur-Seine (FR)**

(72) Inventeur: **NICOLEAU, Grégoire**
**93400 Saint-Ouen-Sur-Seine (FR)**

(74) Mandataire: **Plasseraud IP**
**104 Rue de Richelieu**
**CS92104**
**75080 Paris Cedex 02 (FR)**

(56) Documents cités:
**EP-A1- 2 873 582    JP-A- 2011 016 432**

**EP 3 995 855 B1**

**Description**

La présente invention concerne un procédé de mesure d'une distance entre un véhicule, plus particulièrement ferroviaire ou de transport routier, par exemple un véhicule de transport routier guidé, et un quai.

Le document JP 2011016432 A décrit un dispositif pour déterminer la présence d'un quai en fonction de calculs réalisés par rapport à une hauteur attendue.

Le document EP 2 873 582 A1 décrit un dispositif de commande d'un comble-lacune et un procédé de commande associé, dans lequel le déploiement du comble-lacune et/ou l'ouverture de la porte est décidé en fonction des informations de détection. Lesdites informations sont fournies par une unité de traitement d'images acquises à partir d'ondes réfléchies par des contours d'objets.

Cependant, ce procédé ne permet pas d'obtenir une mesure fiable d'une distance d'un véhicule ferroviaire ou de transport routier, notamment guidé, à un quai.

Une telle mesure permet par exemple d'adapter précisément la sortie du comble-lacune à la géométrie du quai.

Un des buts de l'invention est de proposer un procédé de mesure fiable d'une distance donnée d'un véhicule à un quai.

Dans ce but, l'objet de l'invention est un procédé de mesure selon la revendication 1.

La mesure d'une distance verticale du véhicule ferroviaire ou de transport routier guidé à un quai permet notamment de pouvoir régler la hauteur du véhicule de manière à réduire un écart vertical éventuel entre le quai et une sortie du véhicule.

Le procédé peut en outre présenter une ou plusieurs des caractéristiques des revendications 2 à 8, considérée(s) individuellement ou selon toutes les combinaisons techniquement possibles.

D'autres caractéristiques et avantages de l'invention ressortiront de la description détaillée qui en est donnée ci-dessous, à titre indicatif et nullement limitatif, en référence aux figures annexées, parmi lesquelles :

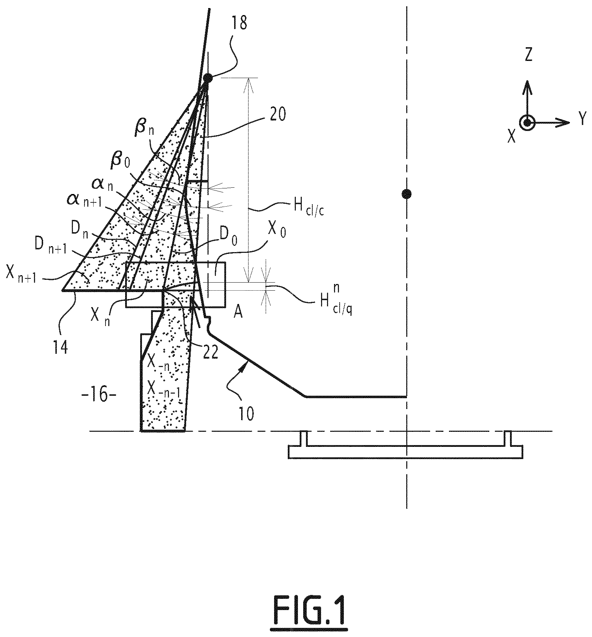

[Fig. 1] la figure 1 est une vue schématique d'un véhicule à proximité d'un quai,

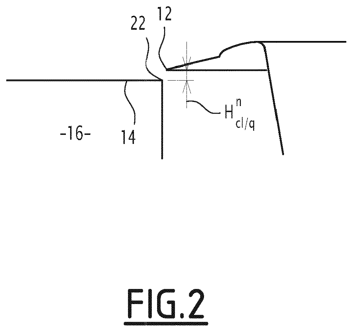

[Fig. 2] la figure 2 est une vue schématique agrandie de la zone A de la figure 1, et
[Fig. 3] la figure 3 est une vue schématique d'un procédé selon un premier mode de réalisation selon l'invention.

L'invention concerne un procédé de mesure d'une distance donnée entre un véhicule 10, notamment un véhicule ferroviaire ou un véhicule de transport routier, par exemple un véhicule de transport routier guidé, et une surface supérieure 14 d'un quai 16. Plus particulièrement, la distance donnée est mesurée entre un repère 12 dudit véhicule et ladite surface supérieure 14 du quai 16.

Le quai 16 est, par exemple, une plateforme d'une station d'un véhicule ferroviaire ou de transport routier guidé. Alternativement, le quai 16 est un trottoir à côté duquel le véhicule stationne.

On définit une direction d'élévation ou verticale Z comme la direction perpendiculaire à un plan de roulement du véhicule, une direction longitudinale X comme la direction de déplacement usuel du véhicule au sens classique et une direction transversale Y comme la direction perpendiculaire à la direction longitudinale X et la direction d'élévation Z.

On appelle « hauteur » une dimension selon la direction d'élévation.

Le repère 12 est, par exemple, un point d'un comble-lacune prévu pour réduire la distance entre une sortie du véhicule 10 et le quai 16, de manière à faciliter la montée et/ou la descente des passagers et objets.

Le véhicule 10 est, par exemple, stationné au quai 16.

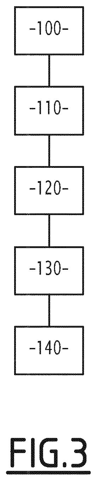

Le procédé de mesure, selon un premier mode de réalisation de l'invention représenté à la figure 3, comporte les étapes suivantes :

- fourniture 100 d'un système de détection 18 monté sur le véhicule 10,
- projection 110 d'une pluralité de rayons par le système de détection,
- mesure 120, pour chaque rayon, d'une distance entre le système de détection et le quai selon ledit rayon détectée par le système de détection,
- exclusion 130 d'une première partie des distances mesurées, et
- calcul 140 d'une distance verticale entre un repère du véhicule et la surface supérieure du quai à partir de distances non comprises dans la première partie des distances mesurées.

Le système de détection 18 est apte à projeter un rayon 20, par exemple un rayon laser, en direction du quai 16.

Alternativement, le rayon 20 est un rayon à technologie radar ou un rayon à ultrasons.

Le système de détection 18 est en outre apte à détecter le rayon renvoyé par un obstacle et à mesurer l'intervalle de temps entre le rayon émis et ledit rayon renvoyé, de manière à calculer la distance entre le système de détection 18 et l'obstacle selon la direction du rayon émis.

Le système de détection 18 permet, par exemple, de réaliser de la télédétection par laser (ou « lidar »).

L'utilisation de la télédétection par laser permet notamment d'avoir un champ de vision du système de détection 18 particulièrement ouvert, par exemple compris entre 0° et 270°, de sorte qu'un bord de quai auprès duquel le véhicule est stationné est toujours dans le champ de vision.

Avantageusement, chaque rayon émis par le système de détection comprend une pluralité d'échos, c'est-à-dire que le rayon est composé d'une pluralité d'impulsions laser. Le système de détection 18 est apte à distinguer chacun des échos du rayon lors de la détection du rayon.

La pluralité d'échos permet notamment un meilleur fonctionnement du système de détection en cas de pluie, brouillard et/ou neige. En effet, par exemple, en cas de pluie, le premier écho est susceptible de rencontrer une goutte d'eau en vol sur le chemin du rayon, alors que le deuxième écho mesurerait la distance au prochain obstacle, par exemple le quai.

Le système de détection 18 est monté sur le véhicule à une hauteur supérieure à une hauteur maximale de quai. La hauteur maximale de quai est la hauteur maximale qu'un quai est susceptible d'avoir à côté du véhicule.

La hauteur maximale de quai correspond, par exemple, à la hauteur d'un pas d'une porte extérieure du véhicule auquel est ajoutée ou soustraite une marge comprise entre 0 et 500 mm.

Au cours de l'étape de projection 110, les rayons émis par le système de détection 18 sont tous compris dans un même plan de projection en direction du quai.

Le plan de projection s'étend selon les directions transversale Y et d'élévation Z. Ainsi, le plan de projection est sensiblement perpendiculaire à la direction longitudinale.

Chaque rayon s'étend depuis le système de détection 18 selon une direction principale respective.

Les rayons forment un intervalle angulaire depuis le système de détection 18, une première borne de l'intervalle angulaire étant compris entre 0 et 10 degrés par rapport à la direction d'élévation et une deuxième borne de l'intervalle angulaire étant compris entre 30 et 45 degrés par rapport à la direction d'élévation.

L'intervalle angulaire est compris d'un même côté du système de détection 18 par rapport à la direction d'élévation Z, plus particulièrement du côté comprenant le quai 16.

Le système de détection 18 émet, par exemple, des rayons avec un pas angulaire donné, typiquement compris entre 0,25° et 2,5°. Le pas angulaire est ici un multiple de 0,25°.

Les rayons sont émis les uns à la suite des autres de proche en proche. L'étape de projection 110 est, par exemple, une étape de balayage d'un rayon laser selon le pas angulaire donné dans le plan de projection.

Chaque rayon émis par le système de détection 18 et renvoyé par un obstacle en direction du système de détection 18 est détecté par ledit système de détection 18.

Le système de détection 18 mesure alors la distance entre ledit système de détection 18 et l'obstacle, selon l'intervalle de temps mis par le rayon pour être renvoyé par l'obstacle.

En cas de rayon composé d'une pluralité d'échos, une mesure est sélectionnée comme reflétant la mesure du quai. Par exemple, la mesure est la plus proche d'une valeur attendue. Additionnellement ou alternativement, la mesure sélectionnée est la mesure comprise dans un intervalle donné.

Alternativement, la mesure sélectionnée est la dernière mesure reçue pour ledit rayon.

Le système de détection 18 mesure ainsi, pour chaque rayon, la distance entre le système de détection et le quai mesurée selon la direction principale respective du rayon.

Chaque rayon et ainsi chaque distance mesurée est associée à un angle $\beta_n$ entre le rayon correspondant et la verticale.

Le système de détection 18 est monté sur le véhicule 10 de manière à ce qu'un rayon de référence prédéfini s'étende selon la verticale de sorte que l'angle $\beta_n$ dudit rayon est nul. Chacun des autres rayons est repéré par rapport audit rayon de référence, notamment à l'aide du nombre de pas angulaire entre ledit rayon et le rayon de référence.

Cela permet par exemple de tracer le profil du quai selon ledit plan d'après les rayons détectés.

Puis, une première partie des distances mesurées est exclue 130.

La première partie des distances comprend, selon l'invention, les distances mesurées qui ne correspondent pas à la surface supérieure 14, c'est-à-dire que le point du quai renvoyant le rayon correspondant à la distance mesurée n'est pas compris dans la surface supérieure 14, et éventuellement à des valeurs dites « aberrantes » comme cela sera décrit par la suite.

Plus particulièrement, la première partie des distances correspond uniquement aux distances mesurées ne correspondant pas à la surface supérieure 14 et éventuellement aux valeurs aberrantes.

Pour exclure les distances mesurées ne correspondant pas à la surface supérieure du quai, le procédé comprend, selon l'invention, une étape de détection d'un bord 22 du quai 16.

La détection du bord 22 du quai comprend ici la comparaison des distances mesurées, le rayon atteignant le bord 22 du quai 16 étant celui dont la distance mesurée entre le système de détection et le quai est la plus faible.

La partie exclue ne correspondant pas à la surface supérieure correspond à un intervalle prédéfini d'angles $\beta_n$ dont la borne supérieure est l'angle du rayon $\beta_0$ atteignant le bord 22 du quai 16.

Additionnellement, une valeur est exclue car dite aberrante lorsqu'elle ne respecte pas au moins un critère prédéfini.

Par exemple, pour chaque angle correspondant à une distance mesurée, un intervalle de distances attendues est prédéterminé. Lorsque les distances mesurées sont en dehors de leur intervalle de distances attendues, lesdites distances mesurées sont exclues.

Dans un mode de réalisation, l'exclusion des valeurs dites aberrantes est réalisée avant l'exclusion des valeurs ne correspondant pas à la surface supérieure 14 du quai 16, de sorte que les valeurs aberrantes ne risquent pas de fausser la détection du bord 22 du quai 16.

Une valeur est susceptible d'être aberrante lorsqu'un obstacle comme un bagage, un passager ou un défaut de surface, typiquement de quai, est présent. La valeur détectée correspond à la valeur renvoyée par ledit obstacle et non par le quai 16, de sorte qu'elle est écartée pour un calcul relatif au quai.

Puis, pour chaque angle dont la distance associée n'est pas exclue, la hauteur entre le repère et le quai est calculée à partir de la distance mesurée associée.

Plus particulièrement, pour chaque angle dont la distance associée n'est pas exclue, la hauteur entre le repère et le quai est calculée par la formule suivante : $H_{cl/q}^n = D_n \times \cos(\alpha_0 + \alpha_n) - H_{cl/c}$ avec $H_{cl/q}^n$ la hauteur entre le repère et le point du quai atteint par le rayon, $D_n$ la distance associée à l'angle, $\alpha_0$ l'angle entre la verticale et le rayon atteignant le bord 16 du quai, $\alpha_n$ l'angle entre le bord du quai et le rayon correspondant à la mesure et $H_{cl/c}$, la hauteur entre le repère et le système de détection.

Alternativement, l'angle $\beta_n$ entre la verticale et le rayon correspondant à la mesure est connu directement, de sorte que la hauteur est calculée par la formule suivante $H_{cl/q}^n = D_n \times \cos(\beta_n) - H_{cl/c}$ .

Enfin, une hauteur générale entre le repère 12 du véhicule 10 et la surface supérieure 14 du quai est calculée.

Ladite hauteur générale est, par exemple, calculée en réalisant une moyenne des hauteurs entre le repère 12 et les points du quai 16 atteints par les rayons $H_{cl/q}^n$ calculés.

Le calcul de la hauteur générale entre ledit repère 12 et la surface supérieure 14 permet notamment d'ajuster la hauteur du véhicule 10 par rapport au quai de manière à réduire la hauteur générale entre le repère 12 du véhicule 10 correspondant ici à un comble-lacune et la surface supérieure 14 du quai, par exemple, pour faciliter l'accès à l'habitacle du véhicule.

Pour ajuster la hauteur du véhicule, il est, par exemple, possible de faire varier la hauteur de la suspension secondaire.

Alternativement, pour détecter le bord 22 du quai, on calcule $H_{cl/q}^n$ pour toutes les valeurs non aberrantes. La variation de la fonction $H_{cl/q}^n$ en fonction de n permet de détecter le bord 22 du quai. En effet, pour les angles pour lesquelles le rayon rencontre la surface supérieure 14 du quai 12, la hauteur $H_{cl/q}^n$ est sensiblement constante dans la mesure où la surface supérieure 14 d'un quai 12 à proximité d'un véhicule 10 est usuellement sensiblement plate. Pour les angles pour lesquelles le rayon ne rencontre pas la surface supérieure 14 du quai 12, la hauteur $H_{cl/q}^n$ varie : plus particulièrement, plus le rayon se rapproche du bord 22 du quai, plus la hauteur $H_{cl/q}^n$ diminue. Le bord 22 du quai 16 correspond à la mesure pour laquelle le comportement de la fonction $H_{cl/q}^n$ en fonction de n évolue d'une fonction décroissante à une fonction sensiblement constante ou inversement selon le sens de balayage du rayon.

Dans un deuxième mode de réalisation de l'invention, le procédé comprend les étapes additionnelles suivantes :

- exclusion d'une deuxième partie des distances mesurées, et
- calcul d'une distance horizontale entre le repère du véhicule et le bord du quai à partir de distances non comprises dans la deuxième partie.

La deuxième partie comprend les mesures correspondant à la surface supérieure 14 du quai 12. Cela correspond, par exemple, à un deuxième intervalle d'angle dont la borne inférieure est l'angle du rayon atteignant le bord 22 du quai 16.

Puis, pour chaque angle dont la distance associée n'est pas exclue, la distance horizontale, plus particulièrement transversale, entre le repère et le quai est calculée à partir de la distance mesurée associée.

Plus particulièrement, pour chaque angle dont la distance mesurée associée n'est pas exclue, la hauteur entre le repère et le quai est calculée par l'une des formules suivantes :

$$d_{cl/q}^n = D_n \times \sin(\alpha_0 + \alpha_n) - d_{cl/c} \text{ ou } d_{cl/q}^n = D_n \times \sin(\beta_n) - d_{cl/c} \quad \text{avec} \quad d_{cl/q}^n \quad \text{la distance transversale}$$

entre le repère et le point du quai atteint par le rayon et $d_{cl/c}$ la distance transversale entre le repère et le système de détection.

Cela permet de connaître la distance transversale entre le véhicule 10 et le quai 16.

Cela permet notamment de savoir si le véhicule 10 est adapté pour le quai 16.

Alternativement ou additionnellement, la distance transversale entre le repère 12 du véhicule et le bord 22 du quai 16 en particulier est mesurée, préférentiellement par l'une des formules précédentes.

Cela permet, par exemple, d'ajuster au moins un paramètre de sortie du comble-lacune pour permettre un meilleur accès au véhicule. Par exemple, la dimension transversale du comble-lacune hors de l'intérieur du véhicule est réglable, de sorte que le comble-lacune est adapté pour être sorti d'une distance supérieure si la distance transversale au quai est plus importante.

Le calcul de la distance selon la direction d'élévation entre un repère du véhicule et la surface supérieure du quai et/ou de la distance horizontale entre un point du véhicule et le quai permettent donc d'ajuster différents paramètres du véhicule, tels que la hauteur dudit véhicule ou la dimension d'un comble-lacune hors de l'intérieur du véhicule, pour permettre un meilleur accès du véhicule.

**Revendications**

1. Procédé de mesure d'une distance donnée entre un véhicule (10) et une surface supérieure (14) d'un quai (16), le procédé comportant les étapes suivantes :

   - fourniture (100) d'un système de détection (18) monté sur le véhicule (10), le système de détection (18) étant apte à projeter un rayon (20) en direction du quai (16),
   - projection (110) d'une pluralité de rayons (20) par le système de détection (18), les rayons étant tous compris dans un même plan de projection en direction du quai (16),
   - mesure (120), pour chaque rayon (20), d'une distance ($D_n$) entre le système de détection (18) et le quai (16) selon une direction respective dudit rayon (20) détectée par le système de détection (18) ; le procédé étant **caractérisé par** les étapes suivantes :

   - exclusion (130) d'une première partie des distances mesurées ($D_n$), la première partie comprenant les distances mesurées ne correspondant pas à la surface supérieure (14), l'exclusion (130) d'une première partie des distances mesurées ($D_n$) comprenant la détection d'un bord (22) du quai (16) qui comprend la comparaison des distances mesurées ($D_n$), chaque distance mesurée ($D_n$) est associée à un angle ($\beta_n$) entre le rayon correspondant (20) et la verticale (Z), la première partie exclue des distances mesurées correspondant à un intervalle prédéfini d'angles dont la borne supérieure est l'angle du rayon ($\beta_0$) atteignant le bord du quai,
   - calcul (140) d'une distance verticale entre un repère (12) du véhicule (10) et la surface supérieure (14) du quai (16) à partir de distances non comprises dans la première partie.

2. Procédé de mesure selon la revendication 1, dans lequel le rayon (20) est un rayon laser.

3. Procédé de mesure selon la revendication 1 ou 2, dans lequel le rayon atteignant le bord (22) du quai (16) est le rayon dont la distance mesurée entre le système de détection (18) et le quai (16) est la plus faible.

4. Procédé de mesure selon l'une quelconque des revendications 1 à 3, comprenant une étape d'exclusion d'une deuxième partie des distances mesurées (Dn), la deuxième partie comprenant les mesures correspondant à la surface supérieure (14) du quai (16), et une étape de calcul d'une distance horizontale entre le repère (12) du véhicule (10) et un bord (22) du quai (16) à partir de distances non comprises dans la deuxième partie, chaque distance mesurée étant associée à un angle par rapport à la verticale (βn), la deuxième partie des distances mesurées exclue correspondant à un intervalle d'angle à la verticale dont la borne inférieure est l'angle du rayon ($\beta_0$) atteignant le bord (22) du quai (16).

5. Procédé de mesure selon l'une quelconque des revendications 1 à 4, comprenant une étape d'exclusion de valeurs de distance entre le système de détection (18) et le quai (16), lesdites valeurs ne respectant pas au moins un critère prédéfini.

6. Procédé de mesure selon la revendication 5, dans lequel :

   - chaque distance mesurée est associée à un angle du rayon,
   - pour chaque angle, un intervalle de distances attendues est prédéterminé, et
   - les distances mesurées en dehors de leur intervalle de distance sont exclues au cours de l'étape d'exclusion de valeurs.

7. Procédé de mesure selon l'une quelconque des revendications 1 à 6, dans lequel chaque distance mesurée est associée à un angle du rayon, pour chaque angle dont la distance associée n'est pas exclue, une distance verticale ( $H_{cl/q}^n$ ) entre le repère (12) et le quai (16) est calculée à partir de la distance mesurée associée.

8. Procédé de mesure selon la revendication 7, dans lequel, pour chaque angle par rapport à la verticale (Z) dont la distance associée n'est pas exclue, la distance verticale entre le repère (12) et le quai (16) est calculée par la formule suivante : $H_{cl/q}^n = D_n \times \cos(\alpha_0 + \alpha_n) - H_{cl/c}$ avec ( $H_{cl/q}^n$ ) la distance verticale entre le repère (12) et le point du quai (16) atteint par le rayon, $\alpha_0$ l'angle entre la verticale et le rayon atteignant le bord du quai (16), $\alpha_n$ l'angle entre le bord du quai (16) et le rayon correspondant à la mesure et ($H_{cl/c}$) la distance verticale entre le repère (12) et le système de détection (18).

**Patentansprüche**

1. Verfahren zum Messen eines gegebenen Abstands zwischen einem Fahrzeug (10) und einer oberen Fläche (14) einer Plattform (16), wobei das Verfahren die folgenden Schritte umfasst:

   - Bereitstellen (100) eines Detektionssystems (18), welches an dem Fahrzeug (10) montiert ist, wobei das Detektionssystem (18) in der Lage ist, einen Strahl (20) in Richtung der Plattform (16) zu projizieren,
   - Projizieren (110) einer Mehrzahl von Strahlen (20) durch das Detektionssystem (18), wobei die Strahlen alle in einer gleichen Projektionsebene in Richtung der Plattform (16) enthalten sind,
   - Messen (120) für jeden Strahl (20) eines Abstands ($D_n$) zwischen dem Detektionssystem (18) und der Plattform (16) gemäß einer entsprechenden Richtung des Strahls (20), welcher durch das Detektionssystem (18) detektiert wird; wobei das Verfahren durch die folgenden Schritte gekennzeichnet ist:

     - Ausschließen (130) eines ersten Teils der gemessenen Abstände ($D_n$), wobei der erste Teil gemessene Abstände umfasst, welche nicht der oberen Fläche (14) entsprechen, wobei das Ausschließen (130) eines ersten Teils der gemessenen Abstände ($D_n$) die Detektion eines Rands (22) der Plattform (16) umfasst, welche den Vergleich der gemessenen Abstände ($D_n$) umfasst, wobei jeder gemessene Abstand ($D_n$) einem Winkel ($\beta_n$) zwischen dem entsprechenden Strahl (20) und der Vertikalen (Z) zugeordnet wird, wobei der ausgeschlossene erste Teil der gemessenen Abstände einem vordefinierten Winkelintervall entspricht, dessen obere Grenze der Winkel des Strahls ($\beta_0$) ist, welcher den Rand der Plattform erreicht,
     - Berechnen (140) eines vertikalen Abstands zwischen einem Bezugspunkt (12) des Fahrzeugs (10) und der oberen Fläche (14) der Plattform (16) ausgehend von Abständen, welche nicht in dem ersten Teil umfasst sind.

2. Verfahren zum Messen nach Anspruch 1, wobei der Strahl (20) ein Laserstrahl ist.

3. Verfahren zum Messen nach Anspruch 1 oder 2, wobei der Strahl, welcher den Rand (22) der Plattform (16) erreicht, der Strahl ist, dessen Abstand, welcher zwischen dem Detektionssystem (18) und der Plattform (16) gemessen wird, am kleinsten ist.

4. Verfahren zum Messen nach einem der Ansprüche 1 bis 3, umfassend einen Schritt eines Ausschließens eines zweiten Teils der gemessenen Abstände (Dn), wobei der zweite Teil die Messungen umfasst, welche der oberen Fläche (14) der Plattform (16) entsprechen, sowie einen Schritt eines Berechnens eines horizontalen Abstands zwischen dem Bezugspunkt (12) des Fahrzeugs (10) und einem Rand (22) der Plattform (16) ausgehend von Abständen, welche nicht in dem zweiten Teil umfasst sind, wobei jeder gemessene Abstand einem Winkel bezüglich der Vertikalen ($\beta_n$) zugeordnet wird, wobei der ausgeschlossene zweite Teil der gemessenen Abstände einem Winkelintervall zu der Vertikalen entspricht, dessen untere Grenze der Winkel des Strahls ($\beta_0$) ist, welcher den Rand (22) der Plattform (16) erreicht.

5. Verfahren zum Messen nach einem der Ansprüche 1 bis 4, umfassend einen Schritt eines Ausschließens von Abstandswerten zwischen dem Detektionssystem (18) und der Plattform (16), wobei die Werte wenigstens ein vordefiniertes Kriterium nicht erfüllen.

6. Verfahren zum Messen nach Anspruch 5, wobei:

- jeder gemessene Abstand einem Strahlwinkel zugeordnet wird,
- für jeden Winkel ein erwartetes Abstandsintervall vorbestimmt wird, und
- die gemessenen Abstände, welche außerhalb ihres Abstandsintervalls liegen, während des Schritts des Ausschließens von Werten ausgeschlossen werden.

7. Verfahren zum Messen nach einem der Ansprüche 1 bis 6, wobei jeder gemessene Abstand einem Strahlwinkel zugeordnet wird, wobei für jeden Winkel, dessen zugeordneter Abstand nicht ausgeschlossen wird, ein vertikaler Abstand ( $H_{cl/q}^n$ ) zwischen dem Bezugspunkt (12) und der Plattform (16) ausgehend von dem zugeordneten gemessenen Abstand berechnet wird.

8. Verfahren zum Messen nach Anspruch 7, wobei für jeden Winkel bezüglich der Vertikalen (Z), dessen zugeordneter Abstand nicht ausgeschlossen wird, der vertikale Abstand zwischen dem Bezugspunkt (12) und der Plattform (16) durch die folgende Formel berechnet wird: $H_{cl/q}^n = D_n \times \cos(\alpha_0 + \alpha_n) - H_{cl/c}$ , wobei ( $H_{cl/q}^n$ ) der vertikale Abstand zwischen dem Bezugspunkt (12) und dem Punkt der Plattform (16) ist, welcher von dem Strahl erreicht wird, $\alpha_0$ der Winkel zwischen der Vertikalen und dem Strahl ist, welcher den Rand der Plattform (16) erreicht, $\alpha_n$ der Winkel zwischen dem Rand der Plattform (16) und dem Strahl ist, welcher der Messung entspricht, und ($H_{cl/c}$) der vertikale Abstand zwischen dem Bezugspunkt (12) und dem Detektionssystem (18) ist.

**Claims**

1. A method for measuring a given distance between a vehicle (10) and an upper surface (14) of a platform (16), the method comprising the following steps:

- providing (100) a detection system (18) mounted on the vehicle (10), the detection system (18) being capable of projecting a beam (20) towards the platform (16),
- projecting (110) a plurality of beams (20) by the detection system (18), the beams all being comprised in a single projection plane towards the platform (16),
- measuring (120), for each beam (20), a distance ($D_n$) between the detection system (18) and the platform (16) in a respective direction of said beam (20) detected by the detection system (18); the method being **characterised by** the following steps:

- excluding (130) a first part of the measured distances ($D_n$), the first part comprising the measured distances not corresponding to the upper surface (14), excluding (130) a first part of the measured distances ($D_n$) comprising detecting an edge (22) of the platform (16) which comprises comparing the measured distances ($D_n$), each measured distance ($D_n$) being associated with an angle ($\beta_n$) between the corresponding beam (20) and the vertical (Z), the excluded first part of the measured distances corresponding to a predefined range of angles, the upper limit of which is the angle of the beam ($\beta_0$) reaching the edge of the platform,
- calculating (140) a vertical distance between a marker (12) of the vehicle (10) and the upper surface (14) of the platform (16) from distances not comprised in the first part.

2. The measurement method according to claim 1, wherein the beam (20) is a laser beam.

3. The measurement method according to claim 1 or 2, wherein the beam reaching the edge (22) of the platform (16) is the beam with the smallest measured distance between the detection system (18) and the platform (16).

4. The measurement method according to any one of claims 1 to 3, comprising a step of excluding a second part of the measured distances ($D_n$), the second part comprising the measurements corresponding to the upper surface (14) of the platform (16), and a step of calculating a horizontal distance between the marker (12) of the vehicle (10) and an edge (22) of the platform (16) from distances not comprised in the second part, each measured distance being associated with an angle relative to the vertical ($\beta_n$), the excluded second part of the measured distances corresponding to a range of angles to the vertical, the lower limit of which is the angle of the beam ($\beta_0$) reaching the edge (22) of the platform (16).

5. The measurement method according to any one of claims 1 to 4, comprising a step of excluding distance values between the detection system (18) and the platform (16), said values not meeting at least one predefined criterion.

6. The measurement method according to claim 5, wherein:

   - each measured distance is associated with a beam angle,
   - for each angle, a range of expected distances is predetermined, and
   - measured distances outside their distance range are excluded during the step of excluding values.

7. The measurement method according to any one of claims 1 to 6, wherein each measured distance is associated with a beam angle, for each angle of which the associated distance is not excluded, a vertical distance ($H_{cl/q}^m$) between the marker (12) and the platform (16) is calculated from the associated measured distance.

8. The measurement method according to claim 7, wherein, for each angle relative to the vertical (Z) of which the associated distance is not excluded, the vertical distance between the marker (12) and the platform (16) is calculated with the following formula: $(H_{cl/q}^m = D_n \times cos(\alpha_0 + \alpha_n) - H_{cl/c}$ where ($H_{cl/q}^m$) is the vertical distance between the marker (12) and the point of the platform (16) reached by the beam, $\alpha_0$ is the angle between the vertical and the beam reaching the edge of the platform (16), $\alpha_n$ is the angle between the edge of the platform (16) and the beam corresponding to the measurement and ($H_{cl/c}$) is the vertical distance between the marker (12) and the detection system (18).

FIG.1

$$H^n_{cl/q}$$

-16-   14   22   12

## FIG.2

-100-

-110-

-120-

-130-

-140-

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2011016432 A

- EP 2873582 A1